# FASCICULE DE BREVET EUROPEEN

(11) **EP 0 427 643 B1**
(45) Date de publication et mention de la délivrance du brevet: **02.03.1994**
(21) Numéro de dépôt: 90420468.2
(22) Date de dépôt: 30.10.1990
(51) Int. Cl.: A22C 21/06

(54) **Installation pour l'éviscération automatique de volailles**
Vorrichtung zum automatischen Ausnehmen von Geflügel
Installation for automatic evisceration of poultry

(30) Priorité: 31.10.1989 FR 8914544
(43) Date de publication de la demande: 15.05.1991
(73) Titulaire: CERMETO, F-42300 Roanne (FR)
(72) Inventeur: Petelet, Claude, F-42300 Roanne (FR)
(74) Mandataire: Laurent, Michel

(56) Documents cités:
- FR-A- 2 073 008
- FR-A- 2 078 287
- FR-A- 2 593 676
- GB-A- 1 378 411

## Description

La présente invention concerne un nouveau type d'installation pour l'éviscération automatique de volailles.

Ce type d'installation se situe généralement au niveau des chaines d'abattage de volailles ou analogues.

Classiquement, dans de telles chaines d'abattage, notamment industrielles, lesdites volailles vivantes sont suspendues par leurs pattes à des balancelles, solidaires d'un convoyeur fonctionnant à vitesse constante, de manière continue. Les volailles sont successivement anesthésiées, saignées, échaudées par trempage ou aspersion et enfin plumées.

Elles subissent alors différentes phases correspondant à l'éviscération.

A ce jour, différentes possibilités sont offertes, dépendant principalement de l'importance des chaines d'abattage et des cadences souhaitées.

Dans les petites chaines d'abattage, il est encore courant de rencontrer une éviscération manuelle. Toutefois, de telles installations tendent à se rarifier, compte tenu des cadences basses obtenues, de la nécessité d'une main d'oeuvre importante et donc coûteuse.

On a également proposé des chaines d'éviscération hautement automatisées, pour lesquelles les différentes phases de l'éviscération sont réalisées au moyen de machines unipostes, c'est-à-dire n'effectuant qu'une seule opération, installées le long du convoyeur. Une telle installation est par exemple décrite dans le document FR-A-2 078 287. Si certes ce type d'installation permet d'obtenir des cadences élevées, en revanche, elles s'avèrent d'un coût tout à fait prohibitif compte tenu de la spécificité de chacune des machines unipostes, et ne peut de la sorte qu'intéresser les grosses chaines d'abattage. En outre, compte tenu de la spécificité même de chacun des postes, une telle installation se révèle d'un encombrement important, incomptaible avec les petites unités d'abattage.

On a également proposé, notamment dans le document FR-A-2 593 676, l'utilisation sur les chaines d'abattage d'un seul robot multi-postes, susceptible d'effectuer les différentes phases de l'éviscération. De fait, un tel robot multi-postes est monté hors du convoyeur et en dérivation. Les volailles arrivent au niveau de ce robot, et sont mises en place sur ce dernier manuellement. De la sorte, on obtient certes une installation de moindre coût, mais également des cadences plus basses. De plus, il est à noter qu'il est nécessaire de décrocher et de raccrocher les volailles. Enfin,le personnel effectuant le contrôle sanitaire par examen de la grappe viscérale, et son enlèvement travaille directement sur la machine, cette dernière effectuant un mouvement alternatif risquant de la sorte de le blesser gravement.

L'invention vise à pallier ces inconvénients.

Elle a pour but une installation intégrée dans une chaine d'abattage de volailles, dans laquelle les différentes phases de l'éviscération sont effectuées directement sur le convoyeur et ce au moyen de machines multi-postes.

Cette installation pour l'éviscération automatique de volailles comprend :
- un convoyeur destiné à transférer les volailles après abattage aux différents postes d'éviscération puis aux postes de préparation et de stockage, le convoyeur étant animé d'un mouvement continu ;
- des organes aptes à réaliser les différentes phases d'éviscération, et étant actionnés automatiquement selon une séquence pré-déterminée.

Cette installation se caractérise en ce que lesdits organes sont répartis en deux postes multifonctions activés selon un mouvement de va-et-vient en synchronisme et parallèlement avec le convoyeur, lesdits postes se translatant à la même vitesse et dans le même sens que le convoyeur pendant la phase opérationnelle desdits organes d'éviscèration.

En d'autres termes, la présente invention consiste à rassembler les organes d'éviscération en deux postes multi-fonctions situés le long du convoyeur et fonctionnant en synchronisme avec lui, à savoir selon un premier temps dans le même sens et à la même vitesse que lui, pour permettre l'activation des organes d'éviscèration aux niveaux des volailles suspendues sur le convoyeur, et dans un second temps, pour permettre le retour desdits organes à un point de départ, au niveau duquel, ils sont susceptibles d'assurer le traitement d'un autre groupe de volailles.

Avantageusement en pratique :
- les deux postes multifonctions sont indépendants mécaniquement ou non l'un de l'autre ;
- la translation desdits organes au sein desdits postes multifonctions le long et à la même vitesse que le convoyeur, est assurée par ce dernier, pendant la phase opérationnelle desdits organes, le retour de ceux-ci à leur position d'origine opérationnelle étant assurée par un organe de rappel ;
- la translation desdits organes au sein des postes multi-fonctions le long et à la même vitesse que le convoyeur, est assurée au moyen d'un vérin hydraulique ou pneumatique, à commande d'avance proportionnelle ; de la sorte, on peut librement choisir entre un entrainement mécanique desdits organes au sein des postes multi-fonctions, en les mettant en prise directe avec le convoyeur, ou bien préférer un entrainement totalement indépendant mécaniquement dudit convoyeur, mais corrélé avec la vitesse de ce dernier ;
- la translation des postes multi-fonctions est en outre assistée par tout moyen approprié ;
- les deux postes multi-fonctions comportent les outils respectivement de découpe du cloaque, de réalisation de la fente de l'abdomen, de l'éviscération proprement dite, et, de déjabotage, de craquage du cou, et de l'aspiration interne des éléments restants, et notamment des poumons ;
- les deux postes multi-fonctions sont séparés d'une distance suffisante pour permettre l'enlèvement manuel de la grappe viscérale et son examen sanitaire visuel ;
- les organes dans chacun des postes multifonctions sont solidaires d'un chariot mobile en translation parallèlement au convoyeur ;
- la translation des chariots mobiles des deux postes multi-fonctions, synchronisée avec le convoyeur pendant la phase opérationnelle des organes d'éviscération est assurée par la solidarisation temporelle desdits chariots au convoyeur ;
- la translation des chariots mobiles des deux postes multi-fonctions, synchronisée avec le convoyeur est assurée au moyen d'un pignon solidaire desdits postes, engrènant sur ledit convoyeur ;
- l'organe de rappel est constitué par un vérin ;
- la durée de la phase opérationnelle des organes d'éviscération sur les volailles au niveau des postes multi-fonctions est inférieure à la durée du déplacement desdites volailles sur le convoyeur au niveau de ces mêmes postes ;
- en fonction de la présentation ultérieure des volailles, une partie seulement des outils des postes multi-fonctions peut être activée .

La manière dont l'invention peut être réalisée et les avantages qui en découlent ressortiront mieux de l'exemple de réalisation qui suit, donné à titre indicatif et non limitatif à l'appui de la figure unique annexée, constituée par une vue schématique de l'installation d'éviscération conforme à la présente invention.

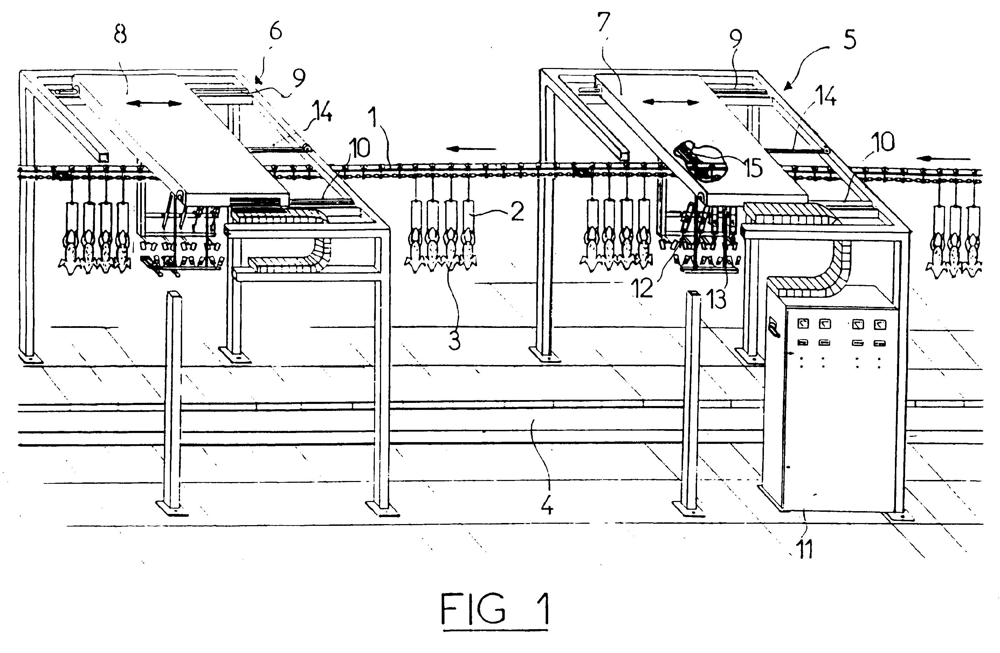

Comme on peut le voir sur la figure 1,l'installation pour l'éviscération de volailles conforme à l'invention, comprend fondamentalement un convoyeur aérien portant la référence générale (1), sur lequel sont fixées des balancelles (2), destinées à permettre la pendaison par les pattes des volailles (3) destinées à être éviscérées ou leur moignons . De manière connue, ces balancelles sont susceptibles de présenter un mouvement pendulaire dans un plan perpendiculaire par rapport au mouvement du convoyeur. Ce convoyeur (1) se déplace de manière continue à vitesse constante comprise entre 2,5 et 10 m.mn⁻¹ en fonction de la cadence désirée.

De manière connue également, l'installation comporte une rigole d'évacuation (4) pour les différents produits d'éviscération et autres déchets, dans laquelle de l'eau circule en permanence et de manière forcée.

Conformément à l'invention, cette installation présente deux postes multi-fonctions portant la référence générale (5) et (6), indépendants l'un de l'autre et montés en série. Ces deux postes multi-fonctions (5) et (6) comprennent chacun un chariot mobile respectivement (7) et (8) susceptible d'être translaté selon une direction parallèle à la direction du mouvement du convoyeur (1). Ces chariots mobiles sont guidés au moyen de rails (9,10) sur lesquels ils reposent par l'intermédiaire de galets. Il va de soi que tout autre moyen approprié similaire pourrait être utilisé.

Selon l'invention, les organes d'éviscération (12,13), notamment les couteaux, pelles, et autres sytèmes de maintien des volailles pendant l'opération de l'outil considéré, sont fixés sous ces chariots mobiles (7) et (8). Leur lieu d'action est situé au niveau des volailles lorsqu'elles sont en place sur les balancelles (2) fixées au convoyeur (1). Typiquement, on distingue :
- l'outil de découpe du cloaque, constitué d'un outil rotatif coupant en forme de cloche ; le cloaque ainsi découpé reste fixé sur le boyau pour éviter tout risque de salissure interne :
- l'outil de fente abdominale, constitué d'une lame du genre cutter, destinée à fendre la peau pour aggrandir le passage des autres outils dans la volaille ;
- l'outil d'évisceration, constitué d'une pelle effectuant un mouvement en U à l'intérieur de la volaille, et déposant les viscères sur le dos de la volaille avant le contrôle sanitaire ;
- l'outil de déjabotage, constitué d'un outil rotatif traversant toute la volaille, et sur lequel s'enroule le jabot ;
- l'outil de craquage du cou, constitué en fait de deux outils non coupant, destiné à craquer le cou au niveau des épaules à travers la peau, puis à l'enlever en le faisant glisser à l'intérieur de la peau.

Il est à noter que pendant le travail de ces différents outils, les volailles sont prises et maintenues au moyen d'organes de maintien, afin qu'elles soient immobilisées et positionnées correctement en fonction de l'action de l'outil considéré.

Les différents types de couteaux et autres pelles sont actionnées pneumatiquement, hydrauliquement, électriquement, voire mécaniquement, et ce de manière connue. On a représenté par la référence générale (11) l'unité centrale électrique du poste multi-fonctions (5). Outre l'actionnement et l'activation des différents outils des organes d'éviscération, cette unité centrale électrique (11) est également responsable du synchronisme d'action des organes (12,13) et du déplacement du chariot mobile (7) par rapport au déplacement du convoyeur (1). Il est de plus à noter, que toute information détectée au niveau du premier poste multi-fonctions (5), telle que par exemple l'absence d'une volaille sur l'une des balancelles, est immédiatement transmise au deuxième poste multi-fonctions (6) par ladite unité centrale (11), afin qu'il prenne en compte cette information.

Dans l'exemple de réalisation décrit, le poste multi-fonctions (5) comprend les organes de découpe du cloaque, de découpe de la fente de l'abdomen, et de l'éviscération proprement dite.

Parallèlement, le poste multi-fonctions (6) comprend les organes de déjabotage, c'est-à-dire de suppression du jabot, de craquage du cou et de l'aspiration interne des derniers éléments restant, et notamment des poumons.

Cette configuration concerne uniquement les volailles destinées à être présentées à la vente sous forme de "P.A.C." (pour prêt à cuire), c'est à dire, des volailles complètement vidées, avec la tête arrachée, les pattes coupées. Une autre présentation dite "effilée" peut être adoptée pour les volailles. Dans ce cas, seuls les viscères sont enlevées, et ce par aspiration. L'installation conforme à l'invention peut, au choix de l'utilisateur, préparer les volailles en vue d'une présentation soit sous forme de "P.A.C.", soit sous forme effilée. Dans ce cas, le premier poste multi-fonctions (5) n'effectue que la découpe cloaque, et le second poste (6) n'effectue que l'aspiration des viscères, après remplacement des outils d'aspiration interne par ceux dits d'"effilage". Ces outils sont par ailleurs facilement remplaçables, compte tenu de leur mode de fixation sur les chariots mobiles, par exemple par encliquetage.

Selon une caractéristique importante de l'invention, les deux postes multi-fonctions (5) et (6) sont séparés d'une distance voisine d'environ cinq mètres, destinés à permettre la sortie manuelle de la grappe viscérale et son examen sanitaire visuel par une personne habilitée. Compte tenu de la vitesse de déplacement du convoyeur, cette distance est largement suffisante pour permettre cet examen et ce, sans danger.

Selon une autre caractéristique de l'invention, les deux chariots mobiles (7) et (8) sont entrainés en translation par le convoyeur lui-même, et donc à la même vitesse au moyen d'un index (15), qui vient se mettre en prise dans la chaine dudit convoyeur (1).

Néanmoins, dans une autre forme de réalisation (non représentée), les chariots mobiles (7,8) sont entrainés à la vitesse du convoyeur au moyen d'un vérin hydraulique, dont la commande est du type à avance proportionnelle.

Selon l'invention, les chariots (7,8) sont rappelés à leur position d'origine au moyen d'un vérin (14), dont l'autre extrémité est fixée au bâti des postes multi-fonctions respectifs (12, 13). Ce vérin, par exemple pneumatique, est également synchronisé sur le convoyeur. Lors du rappel des chariots à leur position d'origine, les organes d'éviscération et de préhension (12,13) subissent un lavage, par tout moyen connu.

Il va être décrit plus en détail le mode de fonctionnement de l'installation conformément à l'invention.

Lorsque les volailles sortent des plumeuses, à la vitesse du convoyeur, elles sont prises en charge au niveau du poste multi-fonctions (5) par les organes d'éviscération de ce poste. Dans l'exemple décrit, quatre volailles sont traitées simultanément dans le poste multi-fonctions (5) pour y subir notamment la découpe du cloaque, la fente de l'abdomen et l'éviscération proprement dite.

Ces opérations s'effectuent directement sur le convoyeur (1) et pendant la progression des volailles sur celui-ci : il n'y a pas d'interruption du convoyeur au niveau de chacun des postes multifonctions (5,6). Pour ce faire, le chariot mobile (7) est rendu solidaire de ladite chaine du convoyeur (1), notamment au moyen d'un index (15).

Lorsque ces opérations sont effectuées, les outils de préhension associés aux outils de découpe libèrent les volailles, qui suspendues aux balancelles (2) continuent d'avancer à la vitesse du convoyeur, alors que le chariot mobile est désengagé dudit convoyeur et est rappelé à sa position initiale au moyen d'un vérin (14) et ce, afin qu'il recommence la même opération pour les quatre volailles suivantes. Le synchronisme de l'installation est prévu de telle sorte, qu'il n'y ait pas de volailles non traitées sur le convoyeur. En d'autres termes, les durées d'action des organes d'éviscération (12,13) et de retour du chariot à sa position d'origine sont inférieures à la durée de déplacement des volailles au niveau du poste multifonctions considéré.

Ainsi, après avoir été traitées par le premier poste multi-fonctions, les volailles continuant d'avancer à la vitesse du convoyeur, passent devant un opérateur qui enlève la grappe viscérale et pratique un examen sanitaire visuel. Cet examen sanitaire terminé, les volailles subissent alors au niveau du deuxième poste multifonctions (6) un nouveau traitement opéré de manière similaire à celui effectué par le premier poste multi-fonctions (5) mais dans lequel les volailles subissent respectivement le déjabotage, le craquage du cou, et l'aspiration interne, notamment des poumons.

A l'issue de ce traitement, les volailles sont convoyées toujours par le convoyeur (1) en un lieu de stockage, et ce de manière connue. Préalablement, elles subissent sur des postes fixes l'égalisation des peaux de cou, et un lavage externe, également de manière connue.

Du fait de l'agencement et de la structure de l'installation conforme à l'invention, le convoyeur peut aussi bien se présenter sous forme linéaire, que sous forme semi-circulaire, et ce notamment en vue de s'adapter à des bâtiments déjà existant ou à des chaines d'abattage déjà en service et désirant se moderniser. Typiquement, les cadences atteintes peuvent varier de mille à quatre mille volailles par heure.

L'installation conforme à l'invention présente de nombreux avantages par rapport au système connu à ce jour.

On peut tout d'abord citer la fiabilité de cette installation. En effet, on ne décroche ni ne raccroche la volaille au convoyeur, de sorte qu'il ne peut y avoir de volaille oubliée lors du traitement, compte tenu du parfait synchronisme des deux postes multi-fonctions (5) et (6).

On peut également citer la sécurité, compte tenu de l'absence de manipulations sur le poste de travail. En effet, comme il l'a été souligné lors de la description, l'examen de la grappe viscérale s'effectue entre les deux postes multi-fonctions et donc sans risque.

On peut souligner l'hygiène de cette installation. En effet, tous les déchets tombent dans la rigole d'évacuation (4) à courant d'eau constant, et ne restent donc pas localisés au niveau des machines. De plus, il a déjà été souligné qu'à chaque retour des chariots (7) et (8) des postes multi-fonctions (5) et (6) à leur position d'origine opérationnelle, il est procédé à un lavage des outils, et ce au moyen de systèmes connus tels que jets d'eau sous pression localisée. De plus, tels qu'on peut les voir sur la figure 1, les postes multi-fonctions sont totalement ouverts et décartérisés, rendant ainsi un nettoyage beaucoup plus aisé.

Les cadences sont très supérieures aux cadences actuelles et sont très facilement modulables en fonction des besoins du moment. Et ce, en rajoutant ou en enlevant des organes au niveau des chariots mobiles (7) et (8) des deux postes multi-fonctions (5) et (6).

Comme on l'a déjà souligné précédemment, cette installation présente un faible encombrement et peut être adaptée soit linéairement, soit semi-circulairement en forme de U, voire de L, ou tout autre configuration.

De la sorte, une telle installation, très facilement modulable, permet d'obtenir des coûts d'éviscération réduits. De plus, les investissements pour une telle installation s'avèrent également réduits compte tenu de sa possibilité d'adaptation sur des chaines déjà existantes.

## Revendications

1. Installation pour l'éviscération automatique de volailles (3), du type comprenant :
- un convoyeur (1) destiné à transférer les volailles (3) après abattage, aux différents postes d'éviscération puis aux postes de préparation et de stockage, ledit convoyeur (1) étant animé d'un mouvement continu ;
- des organes (12,13) aptes à réaliser les différentes phases d'éviscération, actionnés automatiquement selon une séquence pré-déterminée ;
caractérisée en ce que lesdits organes d'éviscération (12,13) sont répartis en deux postes multi-fonctions (5) et (6) effectuant un mouvement de va-et-vient en synchronisme et parallèlement avec le convoyeur (1), lesdits postes (5) et (6) se translatant à la même vitesse et dans le même sens que le convoyeur (1) pendant la phase opérationnelle desdits organes d'évisceration.

2. Installation selon la revendication 1, caractérisée en ce que la translation des organes (12,13) d'évisceration au sein des postes multi-fonctions (5,6) est assurée par le convoyeur (1), le retour desdits organes à leur position opérationnelle d'origine étant assurée par un organe de rappel (14).

3. Installation selon la revendication 2, caractérisée en ce que la translation des organes d'évisceration au sein des postes multi-fonctions (5,6) est en outre assistée par un organe moteur.

4. Installation selon la revendication 1, caractérisée en ce que la translation des organes (12,13) d'évisceration au sein des postes multi-fonctions (5,6) est assurée par un vérin à commande d'avance proportionnelle, le retour desdits organes à leur position opérationnelle d'origine étant également assurée par ce vérin.

5. Installation selon l'une des revendications 1 à 4, caractérisée en ce que les organes d'évisceration (12,13) dans chacun des postes multi-fonctions (5,6) sont solidaires d'un chariot (7,8) mobile en translation parallèlement au convoyeur (1), les dits chariots faisant partie intégrante desdits postes multi-fonctions (5,6).

6. Installation selon la revendication 2, caractérisée en ce que la translation des chariots mobiles (7,8) des deux postes multi-fonctions (5,6), synchronisée avec le convoyeur pendant la phase opérationnelle des organes d'éviscération (12,13) est assurée par la solidarisation temporelle desdits chariots au convoyeur (1), et notamment au moyen d'un pignon solidaire desdits postes, engrènant sur ledit convoyeur

7. Installation selon l'une des revendications 1 à 6, caractérisée en ce que les deux postes multi-fonctions (5) et (6) comportent des organes d'éviscération (12,13) respectivement :
- de découpe du cloaque, de fente de l'abdomen, de l'éviscération proprement dite,
- et de déjabotage, de craquage du cou, et d'aspiration intérieure des éléments restant, et notamment des poumons.

8. Installation selon la revendication 7, caractérisée en ce qu'en fonction de la présentation ultérieure des volailles, une partie seulement des organes d'éviscération (12,13) est activée.

9. Installation selon l'une des revendications 1 à 8, caractérisée en ce que les deux postes multi-fonctions (5,6) sont séparés d'une distance suffisante pour permettre l'enlèvement manuel de la grappe viscérale et son examen sanitaire visuel.

10. Installation selon l'une des revendications 1 à 9, caractérisée en ce que la durée de la phase opérationnelle des organes d'éviscération (12,13) sur les volailles (3) au niveau des postes multi-fonctions (5) et (6) est inférieure à la durée du déplacement desdites volailles au niveau de ces mêmes postes.

## Patentansprüche

1. Vorrichtung zum automatischen Ausnehmen von Geflügel (3) umfassend;
- Einen Förderer (1) zum Übertragen des Geflügels (3) nach dem Schlachten zu verschiedenen Ausnehmstationen, dann zu Stationen zur Vorbereitung und zur Lagerung, wobei der Förderer (1) eine kontinuierliche Bewegung ausführt;
- Organe (12, 13), die zur Durchführung verschiedener Phasen des Ausnehmens geeignet sind und die automatisch gemäß einer vorbestimmten Folge aktiviert werden ;
dadurch gekennzeichnet, daß die Ausnehmorgane (12, 13) in zwei Multifunktionsstationen (5 und 6) aufgeteilt sind, die eine mit dem Förderer (1) synchrone und parallele Bewegung des Kommens und Gehens ausführen, wobei sich die Stationen (5 und 6) mit der gleichen Geschwindigkeit und in der gleichen Art verschieben, mit der sich der Förderer (1) während der Arbeitsphase der Ausnehmorgane bewegt.

2. Vorrichtung gemäß Anspruch 1, dadurch gekennzeichnet, daß die Translation der Ausnehmorgane (12, 13) im Inneren der Multifunktionsstationen (5, 6) durch den Förderer (1) erzeugt wird, und daß die Rückkehr dieser Organe in ihre ursprüngliche Arbeitsposition durch ein Rückstellorgan (14) bewirkt wird.

3. Vorrichtung gemäß Anspruch 2, dadurch gekennzeichnet, daß die Translation der Ausnehmorgane im Inneren der Multifunktionsstationen (5, 6) außerdem durch eine Motoreinrichtung unterstützt wird.

4. Vorrichtung gemäß Anspruch 1, dadurch gekennzeichnet, daß die Translation der Ausnehmorgane (12, 13) im Inneren der Multifunktionsstationen (5, 6) durch einen Zylinder mit einem Vorschub gesteuert bewirkt wird, der der Rückkehr dieser Organe in ihre ursprüngliche Arbeitsposition proportional ist, die gleichfalls durch den Zylinder bewirkt wird.

5. Vorrichtung gemäß Anspruch 4, dadurch gekennzeichnet, daß die Ausnehmorgane (12, 13) in jeder Multifunktionsstation (5, 6) mit einem Schlitten (7, 8) verbunden sind, der bei der Translation parallel zu dem Förderer (1) beweglich ist, wobei die Schlitten als integraler Teil der Multifunktionsstationen (5, 6) ausgebildet sind.

6. Vorrichtung gemäß Anspruch 2, dadurch gekennzeichnet, daß die Translation der beweglichen Schlitten (7, 8) der beiden Multifunktionsstationen (5, 6), die mit dem Förderer während der Arbeitsphase der Ausnehmorgane (12, 13) synchronisiert ist, durch eine zeitweise Ankoppelung der Schlitten an den Förderer (1) und insbesondere durch ein Ritzelelement, das in den Stationen in den Förderer eingreift, bewirkt wird.

7. Vorrichtung gemäß einem der Ansprüche 1 bis 6, dadurch gekennzeichnet, daß die beiden Multifunktionsstationen (5 und 6) jeweils folgende Ausnehmorgane (12, 13) umfassen:
- Zum Herausschneiden des Darminhalts und der Abdomenspalte, genauer gesagt zu einem geeigneten Ausnehmen,
- und zum Abtrennen des Halses und zum Absaugen verbleibender Elemente, insbesondere der Lunge von innen.

8. Vorrichtung gemäß Anspruch 7, dadurch gekennzeichnet, daß zum Zwecke der späteren Präsentation des Geflügels nur ein Teil der Ausnehmorgane (12, 13) aktiviert wird.

9. Vorrichtung gemäß einem der Ansprüch 1 bis 8, dadurch gekennzeichnet, daß die beiden Multifunktionsstationen (5, 6) ausreichend voneinander beabstandet sind, um ein manuelles Entfernen der Eingeweide und ihre Gesundheitsinspektion zu erlauben.

10. Vorrichtung gemäß einem der Ansprüche 1 bis 9, dadurch gekennzeichnet, daß die Dauer der Arbeitsphase der Ausnehmorgane (12, 13) am Geflügel (3) auf dem Niveau der Multifunktionsstationen (5 oder 6) kleiner als die Dauer der Bewegung des Geflügels auf dem Niveau derselben Stationen ist.

## Claims

1. Installation for the automatic evisceration of poultry (3), of the type comprising:
- a conveyor (1) intended to transfer the poultry (3), after slaughter, to the various evisceration stations then to the dressing and storing stations, the said conveyor (1) being given a continuous movement;
- members (12, 13) capable of carrying out the various evisceration phases, which members are actuated automatically according to a predetermined sequence;
characterized in that the said evisceration members (12, 13) are distributed at two multi-function stations (5) and (6), effecting a to-and-fro movement in synchronism and in parallel with the conveyor (1), the said stations (5) and (6) moving translationally at the same speed and in the same direction as the conveyor (1) during the operational phase of the said evisceration members.

2. Installation according to Claim 1, characterized in that the translational movement of the evisceration members (12, 13) inside the multi-function stations (5, 6) is provided by the conveyor (1), the return of the said members to their starting operational position being provided by a return member (14).

3. Installation according to Claim 2, characterized in that the translational movement of the evisceration members inside the multi-function stations (5, 6) is further assisted by a drive member.

4. Installation according to Claim 1, characterized in that the translational movement of the evisceration members (12, 13) inside the multi-function stations (5, 6) is provided by an actuator with proportional advancement control, the return of the said members to their starting operational position also being ensured by this actuator.

5. Installation according to one of Claims 1 to 4, characterized in that the evisceration members (12, 13) in each of the multi-function stations (5, 6) are secured to a carriage (7, 8) which can move translationally parallel to the conveyor (1), the said carriages forming an integral part of the said multi-function stations (5, 6).

6. Installation according to Claim 2, characterized in that the translational movement of the movable carriages (7, 8) of the two multi-function stations (5, 6), synchronized with the conveyor during the operational phase of the evisceration members (12, 13) is ensured by temporarily securing the said carriages to the conveyor (1), and particularly by means of a gearwheel secured to the said stations, meshing on the said conveyor.

7. Installation according to one of Claims 1 to 6, characterized in that the two multi-function stations (5) and (6) include evisceration members (12, 13) respectively:
- for cutting the cloaca, slitting the abdomen, and for evisceration proper,
- and for removing the crop, cracking the neck, and internally sucking out the remaining elements, and particularly the lungs.

8. Installation according to Claim 7, characterized in that, depending on the subsequent dressing of the poultry, only part of the evisceration members (12, 13) is activated.

9. Installation according to one of Claims 1 to 8, characterized in that the two multi-function stations (5, 6) are separated by a sufficient distance to allow the manual removal of the visceral cluster and its visual health inspection.

10. Installation according to one of Claims 1 to 9, characterized in that the duration of the operational phase of the evisceration members (12, 13) on the poultry (3) at the multi-function stations (5) and (6) is less than the duration of the displacement of the said poultry at the same stations.
